# FASCICULE DE BREVET EUROPEEN

(11) **EP 3 199 865 B1**
(45) Date de publication et mention de la délivrance du brevet: **05.08.2020**
(21) Numéro de dépôt: 17155298.7
(22) Date de dépôt: 24.06.2010
(51) Int. Cl.: F21S 41/143, F21S 41/24, F21S 43/237, F21S 43/239, F21S 43/243, F21S 43/245, F21S 43/249, F21S 43/251, B60Q 1/26, B60Q 1/28, B60Q 1/38

(54) **DISPOSITIF OPTIQUE, NOTAMMENT POUR VÉHICULE AUTOMOBILE**
OPTISCHE VORRICHTUNG, INSBESONDERE FÜR KRAFTFAHRZEUG
OPTICAL DEVICE, IN PARTICULAR FOR A MOTOR VEHICLE

(30) Priorité: 30.06.2009 FR 0954436
(43) Date de publication de la demande: 02.08.2017
(62) Demande divisionnaire de: 10167246.7
(73) Titulaire: Valeo Vision, 93012 Bobigny Cedex (FR)
(72) Inventeur: DE LAMBERTERIE, Antoine, 75019 PARIS (FR)

(56) Documents cités:
- EP-A1- 1 288 562
- EP-A1- 1 854 667
- CN-Y- 2 427 017
- DE-A1- 10 312 950
- DE-A1- 19 939 087
- DE-A1-102005 036 018
- DE-A1-102005 048 498
- DE-A1-102007 035 021
- FR-A1- 2 904 680
- JP-A- 2005 101 296
- JP-A- 2006 236 588
- US-A1- 2007 139 946
- US-A1- 2009 027 911

## Description

L'invention concerne un dispositif optique, notamment pour véhicule automobile, tel qu'un dispositif d'éclairage ou de signalisation.

On connaît par la demande de brevet FR 2 904 680 un feu de véhicule automobile comportant trois diodes électroluminescentes (LED) et un guide de lumière en forme de tige associé à ces LED. Ce feu permet un seul type de photométrie. On connaît également le document JP 2006-236588 A qui divulgue un dispositif optique permettant deux fonctions photométriques prédéterminées différentes.

L'invention vise notamment à proposer un nouveau dispositif optique permettant deux fonctions photométriques différentes.

L'invention a ainsi pour objet un dispositif optique pour véhicule automobile, tel qu'un dispositif d'éclairage ou de signalisation, ce dispositif comportant :
- au moins deux sources lumineuses associées à des fonctions photométriques prédéterminées différentes,
- un guide de lumière principal comportant une face de sortie et agencé pour guider la lumière provenant desdites sources lumineuses vers cette face de sortie de manière à ce que cette face de sortie définisse une surface éclairante commune pour les deux fonctions photométriques.

L'une des fonctions photométriques correspond à un éclairage de jour, et l'autre fonction photométrique correspond à un feu clignotant de changement de direction. L'une des sources lumineuse est agencée pour émettre une lumière blanche associée à la fonction photométrique d'éclairage de jour et l'autre des sources lumineuse est agencée pour émettre une lumière de couleur ambre associée à la fonction photométrique de feu clignotant de changement de direction. Le dispositif optique comporte en outre un guide de lumière auxiliaire, notamment réalisé d'un seul tenant, agencé de manière à guider la lumière depuis l'une des sources lumineuses vers le guide de lumière principal. La sortie du guide auxiliaire ou le guide principal comporte en outre une zone de réflexion qui réfléchit la lumière radialement dans le guide de lumière principal.

Grâce à l'invention, il est possible d'avoir un dispositif optique relativement compact et peu cher, qui permet d'associer deux fonctions photométriques différentes.

En effet des pièces communes, par exemple le guide de lumière principal, peuvent, le cas échéant, être utilisées pour les deux fonctions photométriques à la fois.

De plus la technologie de type guide optique est favorable à une association de fonctions photométriques différentes dans la mesure où l'aspect allumé et la photométrie de l'une ou l'autre des fonctions peuvent être proches même si l'emplacement des sources associées à chaque fonction est différente.

Le dispositif est avantageusement agencé de manière à ce que, lorsque l'une des sources lumineuses est allumée, l'autre source lumineuse est éteinte de sorte que seule l'une des fonctions photométriques est activée à la fois.

De préférence, les sources lumineuses sont agencées pour émettre des lumières de couleurs différentes.

Dans un exemple de mise en oeuvre de l'invention, l'une au moins des sources lumineuses, notamment les deux sources lumineuses, sont formées chacune par une puce émettrice de lumière d'une LED.

Si on le souhaite, les sources lumineuses sont formées sur des LED distinctes.

Les LED peuvent par exemple être portées par un support commun, ce support comportant par exemple une feuille flexible à circuit électrique ou une carte de circuit imprimé.

Ceci permet, grâce à ce support commun, de réduire le nombre de pièces du dispositif.

Dans un autre exemple de mise en oeuvre de l'invention, les sources lumineuses sont formées par des puces émettrices de lumière d'une même LED.

Dans une variante non revendiquée, les sources de lumière sont associées directement au guide de lumière principal, sans utilisation d'un guide de lumière auxiliaire.

Dans un exemple de mise en oeuvre de l'invention, le guide de lumière principal et/ou le guide de lumière auxiliaire comportent au moins deux entrées associées chacune à l'une des sources lumineuses de manière à ce que la lumière de cette source pénètre dans le guide de lumière par l'entrée associée.

Cette entrée de lumière peut comprendre une zone de couplage entre la source lumineuse et le guide de lumière auxiliaire.

Si on le souhaite, le guide de lumière principal et/ou le guide de lumière auxiliaire comporte une unique sortie de la lumière agencée pour permettre la sortie de la lumière guidée dans ce guide lumière.

Cette sortie, lorsqu'elle est formée sur le guide auxiliaire, peut notamment comporter la zone de réflexion par exemple sensiblement conique qui réfléchit la lumière radialement pour créer une source de lumière secondaire à émission de révolution radiale.

Cette sortie peut, dans une variante non revendiquée, être sensiblement plane afin de créer une source de lumière émettant dans une direction particulière.

Par exemple le guide de lumière principal et/ou l'éventuel guide de lumière auxiliaire présente une forme générale en Y, les entrées de la lumière étant formées chacune sur une branche du haut du Y et la sortie de la lumière étant formée sur le pied du Y.

Le guide de lumière, notamment de forme en Y, peut présenter une section transversale sensiblement circulaire. Les branches du Y sont par exemple sensiblement cylindriques.

Avantageusement les entrées de lumière du guide comportent des axes qui se coupent à proximité de la sortie.

Le cas échéant, les deux branches du haut du Y sont séparées l'une de l'autre sur une hauteur d'au moins 20% de la hauteur totale du guide de lumière, notamment d'au moins 50% de cette hauteur totale.

En variante, les deux branches du Y sont jointives sensiblement sur toute leur hauteur.

Dans un autre exemple de mise en oeuvre de l'invention, le dispositif comporte deux guides de lumière auxiliaires distincts associés chacun à l'une des sources lumineuses.

Le guide de lumière principal et/ou le guide de lumière auxiliaire est par exemple réalisé dans un matériau permettant de guider la lumière dans sa masse par réflexion totale.

Le guide lumière est par exemple réalisé avec un indice de réfraction de 1.49 à 1.59, par exemple en matériau tel que du PMMA, PC, silicone, COC, etc...

En variante, le guide de lumière auxiliaire comporte au moins un faisceau de fibres optiques.

Avantageusement le guide de lumière principal comporte un orifice, notamment traversant, agencé pour recevoir une extrémité du guide de lumière auxiliaire de manière à que la lumière quittant ce guide de lumière auxiliaire puisse pénétrer dans le guide de lumière principal.

En variante, le guide de lumière principal comporte une face externe, notamment sensiblement plane, disposée en regard de la sortie du guide de lumière auxiliaire.

Le guide de lumière principal peut être réalisé d'un seul tenant.

Si on le souhaite, la lumière provenant de l'une au moins des sources lumineuses pénètre directement dans le guide de lumière principal, à savoir sans passer dans un guide de lumière auxiliaire.

Avantageusement le guide de lumière principal comporte la zone de réflexion, notamment sensiblement conique, pour réfléchir, dans le guide de lumière principal, la lumière provenant des sources lumineuses ou, le cas échéant, du guide de lumière auxiliaire.

La zone de réflexion peut présenter une forme choisie de manière à redresser les rayons lumineux provenant alternativement des sources lumineuses, de sorte que ces rayons soient localement parallèles au guide de lumière.

Dans une variante non revendiquée, cette zone de réflexion forme un coupleur à deux foyers lorsque les sources lumineuses sont placées à proximité du guide principal, sans utilisation de guide auxiliaire.

De préférence le guide de lumière principal présente sensiblement une forme de nappe.

Dans un exemple de mise en oeuvre de l'invention, le guide de lumière principal comporte une zone de réflexion pourvue d'ondulations, choisies de manière à redresser les rayons lumineux provenant de l'une au moins des sources lumineuses.

Par exemple, le guide de lumière principal comporte des moyens de découplage, notamment des prismes, agencés pour diffuser la lumière latéralement, notamment sur une surface cylindrique du guide.

L'invention a également pour objet une LED comportant deux puces émettrices de lumière, de couleurs différentes, notamment l'une des puces émet une lumière blanche et l'autre une lumière ambre.

L'invention pourra être mieux comprise à la lecture de la description détaillée qui va suivre, d'exemples de mise en œuvre non limitatifs de l'invention, et à l'examen du dessin annexé, sur lequel :
- la figure 1 illustre, schématiquement et partiellement, un dispositif optique selon un exemple de mise en œuvre de l'invention,
- la figure 2 représente, schématiquement et partiellement, suivant une coupe transversale, un dispositif optique selon un autre exemple de mise en œuvre de l'invention,
- la figure 3 illustre, schématiquement et partiellement, un exemple de couplage entre le guide de lumière et les sources lumineuses, conformément à l'invention,
- les figures 4 à 10 représentent, schématiquement et partiellement, d'autres exemples de mise en œuvre, et
- la figure 11 est une vue suivant l'axe X, schématique et partielle, de la zone de réflexion de guide de lumière de la figure 6.

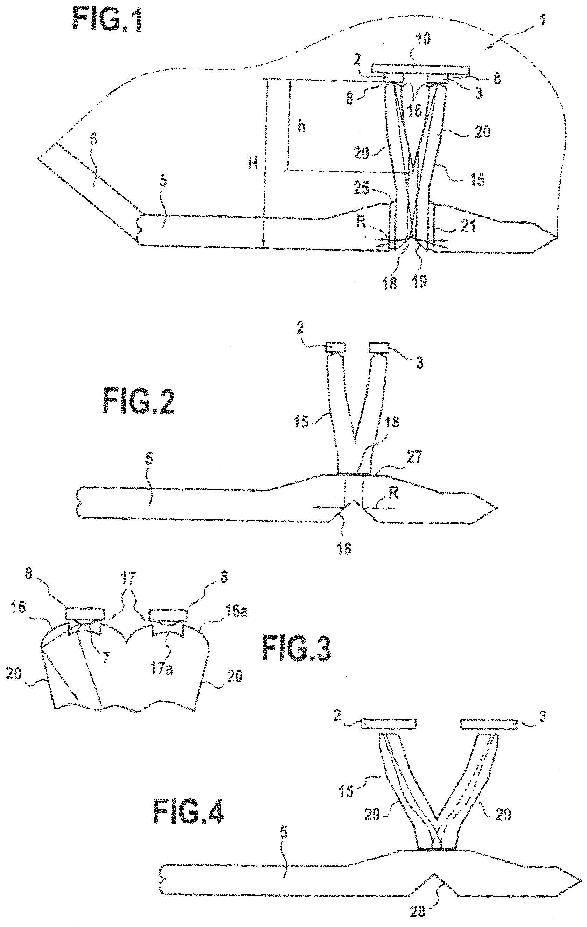

On a représenté sur la figure 1 un dispositif optique 1 pour véhicule automobile, tel qu'un dispositif d'éclairage ou de signalisation, comportant :
- les sources lumineuses 2 et 3 associées à des fonctions photométriques prédéterminées différentes,
- un guide de lumière principal 5 comportant une face de sortie 6 et agencé pour guider la lumière provenant des sources lumineuses 2 et 3 vers cette face de sortie 6 (éventuellement, pour certains rayons, après réflexion sur une face arrière du guide de lumière) de manière à ce que cette face de sortie définisse une surface éclairante commune pour les deux fonctions photométriques.

Cette surface éclairante est celle visible par des personnes à l'extérieur au véhicule.

Par exemple, l'une des fonctions photométriques correspond à un éclairage de jour, et l'autre fonction photométrique correspond à un feu clignotant de changement de direction.

Le dispositif 1 est agencé de manière à ce que, lorsque l'une des sources lumineuses 2 ;3 est allumée, l'autre source lumineuse 2 ;3 est éteinte de sorte que les fonctions photométriques soient activées alternativement.

Dans l'exemple considéré, les sources lumineuses 2 et 3 sont agencées pour émettre des lumières de couleurs différentes.

Par exemple l'une des sources lumineuses 2 ;3 est agencée pour émettre une lumière blanche associée à la fonction photométrique d'éclairage de jour et l'autre des sources lumineuses 2 ;3 est agencée pour émettre une lumière de couleur ambre associée à la fonction photométrique de feu clignotant de changement de direction.

Les sources lumineuses 2 et 3 sont formées chacune par une puce 7 émettrice de lumière d'une LED 8 (voir figure 3 notamment).

Dans l'exemple des figures 1 et 3, les sources lumineuses 2 et 3 sont formées sur des LED distinctes.

Ces LED 8 peuvent être portées par un support commun 10, ce support comportant par exemple une feuille flexible à circuit électrique ou une carte de circuit imprimé, de préférence plane.

Le dispositif 1 comporte en outre un guide de lumière auxiliaire 15, réalisé d'un seul tenant, agencé de manière à guider la lumière depuis les sources lumineuses 2 et 3 vers le guide de lumière principal 5.

Le guide de lumière auxiliaire 15 comporte deux entrées 16 associées chacune à l'une des sources lumineuses 2 et 3 de manière à ce que la lumière de cette source pénètre dans le guide de lumière par l'entrée 16 associée.

Cette entrée 16 comprend une zone de couplage 17 entre la source lumineuse 2 ; 3 et le guide de lumière auxiliaire 15, permettant de collimater les rayons issus de la source.

Cette zone de couplage 17 est par exemple formée par une cavité avec un fond convexe 17a (voir figure 3 notamment).

La surface 16a autour de la zone de couplage 17 est sensiblement de forme en paraboloïde.

Le guide de lumière auxiliaire 15 comporte une unique sortie 18 de la lumière agencée pour permettre la sortie de la lumière guidée dans ce guide lumière auxiliaire 15.

Cette sortie 18 comprend une zone de réflexion ou de renvoi sensiblement conique 19.

Dans l'exemple décrit, le guide de lumière auxiliaire 15 présente une forme générale en Y, les entrées 16 de la lumière étant formées chacune sur une branche 20 du haut du Y et la sortie 18 de la lumière étant formée sur le pied 21 du Y.

Les deux branches 20 du haut du Y sont séparées l'une de l'autre sur une hauteur h d'au moins 20% de la hauteur totale H du guide de lumière 15, notamment d'au moins 50% de cette hauteur totale.

En variante, comme illustré sur la figure 3, les deux branches 20 du Y sont jointives sensiblement sur toute leur hauteur.

Le guide de lumière principal 5 comporte un orifice 25, traversant, agencé pour recevoir une extrémité du guide de lumière auxiliaire 15 de manière à que la lumière quittant ce guide de lumière auxiliaire 15 puisse pénétrer dans le guide de lumière principal 5 grâce à la forme sensiblement conique de la sortie 18 qui permet un renvoi des rayons de lumière R dans le guide 5.

En variante, comme illustré sur la figure 2, le guide de lumière principal 5 comporte une face externe sensiblement plane 27 disposée en regard de la sortie 18, sensiblement plane, du guide de lumière auxiliaire 15.

Dans ce cas, le guide de lumière principal 5 comporte une zone de réflexion ou de renvoi 28 de forme sensiblement conique pour diriger les rayons R dans le guide 5 de manière radiale.

Dans les exemples qui viennent d'être décrits, le guide de lumière auxiliaire 15 est réalisé dans un matériau permettant de guider la lumière par réflexion totale.

En variante, comme illustré sur la figure 4, le guide de lumière auxiliaire 15 comporte deux faisceaux 29 d'une multitude de fibres optiques se rejoignant de manière adéquate, notamment de façon à ce que les fibres des deux faisceaux 29 se mélangent de manière aléatoire pour avoir une répartition uniforme du flux issu de chaque LED.

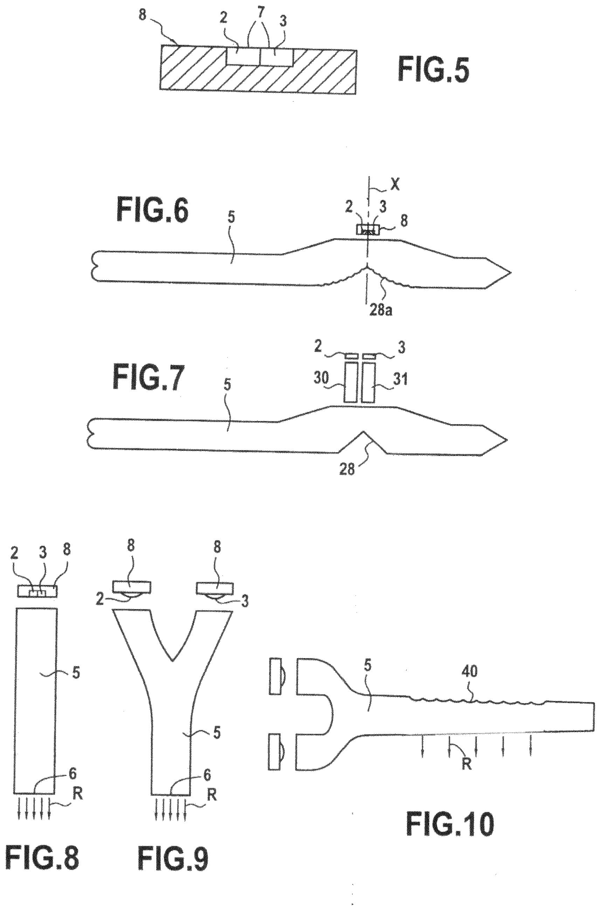

Dans un autre exemple de mise en oeuvre de l'invention, comme illustré sur la figure 7, le dispositif 1 comporte deux guides de lumière auxiliaires distincts 30 et 31 associés chacun à l'une des sources lumineuses 2 et 3.

Dans l'exemple non revendiqué de la figure 6, la lumière provenant des sources lumineuses 2 et 3 pénètre directement dans le guide de lumière principal 5 suivant un axe X, sans passer dans un guide de lumière auxiliaire.

Dans l'exemple décrit, les sources lumineuses 2 et 3 sont formées par des puces 7 émettrices de lumière d'une même LED 8.

Les deux puces 7 peuvent être espacées l'une de l'autre par exemple d'une distance d'1 mm.

Ces sources de lumière 2 et 3 peuvent, le cas échéant, être allumées l'une sans l'autre ou les deux en même temps.

Le guide de lumière principal 5 comporte une zone de réflexion 28a, sensiblement conique, pour réfléchir, dans le guide de lumière principal 5, la lumière provenant des sources lumineuses 2 et 3.

Cette zone de réflexion 28a peut par exemple présenter, en section suivant un plan contenant l'axe X, un profil généralement parabolique.

Dans ce cas, la génératrice du cône est une parabole au lieu d'être une droite.

La zone de réflexion 28a présente, au moins localement, une forme sensiblement ondulée choisie de manière à redresser les rayons lumineux provenant alternativement des sources lumineuses 2 et 3. Cette zone de réflexion 28a forme un coupleur à deux foyers.

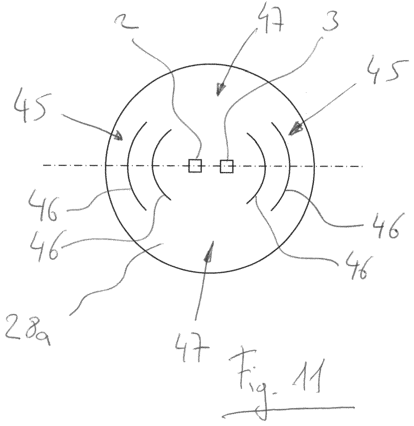

Par exemple, comme illustré sur la figure 11, la zone de réflexion 28a peut comporter deux régions 45 pourvues d'ondulations 46, ces régions étant par exemple alternées avec deux régions 47 qui en sont dépourvues.

Dans les exemples décrits, le guide de lumière principal 5 présente sensiblement une forme de nappe.

En variante, dans l'exemple décrit à la figure 8, le guide principal 5 présente une forme sensiblement cylindrique, associé à une LED 8 à deux puces 2 et 3.

Dans l'exemple illustré à la figure 9, le guide de lumière principal 5 présente une forme en Y à l'instar du guide auxiliaire précédemment décrit, associé à deux LED 8 pour chaque branche du Y.

Dans les exemples des figures 8 et 9, la face de sortie 6 est formée sur une surface sensiblement en disque.

En variante, comme illustré sur la figure 10, le guide de lumière principal 5, de forme en Y, comporte des moyens de découplage 40, formés par exemple par des prismes, agencés pour diffuser la lumière latéralement, notamment sur une surface cylindrique du guide.

## Revendications

1. Dispositif optique (1), pour véhicule automobile, tel qu'un dispositif d'éclairage ou de signalisation, ce dispositif comportant :
- au moins deux sources lumineuses (2 ;3) associées à des fonctions photométriques prédéterminées différentes,
- un guide de lumière principal (5) comportant une face de sortie (6) et agencé pour guider la lumière provenant desdites sources lumineuses vers cette face de sortie de manière à ce que cette face de sortie définisse une surface éclairante commune pour les deux fonctions photométriques,
dans lequel l'une des fonctions photométriques correspond à un éclairage de jour, et l'autre fonction photométrique correspond à un feu clignotant de changement de direction, notamment les sources lumineuses (2 ;3) sont agencées pour émettre des lumières de couleurs différentes ;
dans lequel l'une des sources lumineuse est agencée pour émettre une lumière blanche associée à la fonction photométrique d'éclairage de jour et l'autre des sources lumineuse est agencée pour émettre une lumière de couleur ambre associée à la fonction photométrique de feu clignotant de changement de direction ; et **caractérisé par le fait qu'**il comporte un guide de lumière auxiliaire (15), notamment réalisé d'un seul tenant, agencé de manière à guider la lumière depuis l'une des sources lumineuses vers le guide de lumière principal ; et
**par le fait que** la sortie du guide auxiliaire ou le guide principal comporte une zone de réflexion qui réfléchit la lumière radialement dans le guide de lumière principal.

2. Dispositif selon la revendication précédente, **caractérisé par le fait que** l'une au moins des sources lumineuses, notamment les deux sources lumineuses, sont formées chacune par une puce émettrice de lumière d'une LED (8).

3. Dispositif selon la revendication précédente, **caractérisé par le fait que** les sources lumineuses sont formées sur des LED (8) distinctes.

4. Dispositif selon la revendication précédente, **caractérisé par le fait que** les LED (8) sont portées par un support commun (10), ce support comportant notamment une feuille flexible à circuit électrique ou une carte de circuit imprimé.

5. Dispositif selon la revendication 2, **caractérisé par le fait que** les sources lumineuses (2 ;3) sont formées par des puces émettrices (7) de lumière d'une même LED.

6. Dispositif selon l'une quelconque des revendications précédentes, **caractérisé par le fait que** le guide de lumière principal et/ou le guide de lumière auxiliaire (15) comportent au moins deux entrées (16) associées chacune à l'une des sources lumineuses de manière à ce que la lumière de cette source pénètre dans le guide de lumière par l'entrée associée.

7. Dispositif selon la revendication 6, **caractérisé par le fait que** le guide de lumière de lumière principal (5) et/ou le guide de lumière auxiliaire (15) présente une forme générale en Y, les entrées de la lumière étant formées chacune sur une branche du haut du Y et la sortie de la lumière étant formée sur le pied du Y.

8. Dispositif selon l'une quelconque des revendications précédentes, **caractérisé par le fait que** le guide de lumière principal présente sensiblement une forme de nappe.

9. Dispositif selon l'une des revendications précédentes, **caractérisé par le fait que** le guide de lumière principal (5) comporte une zone de réflexion pourvue d'ondulations, choisies de manière à redresser les rayons lumineux provenant des sources lumineuses (2 ;3).

10. Dispositif selon l'une des revendications précédentes, **caractérisé par le fait que** le guide de lumière principal (5) comporte des moyens de découplage (40), notamment des prismes, agencés pour diffuser la lumière latéralement, notamment sur une surface cylindrique du guide.

## Patentansprüche

1. Optische Vorrichtung (1) für ein Kraftfahrzeug wie zum Beispiel eine Beleuchtungs- oder Signalisierungsvorrichtung wobei diese Vorrichtung umfasst:
- mindestens zwei Lichtquellen (2; 3), die verschiedenen vorbestimmten fotometrischen Funktionen zugeordnet sind,
- einen Hauptlichtleiter (5), der eine Austrittsseite (6) umfasst und dazu ausgelegt ist, das von den Lichtquellen kommende Licht zu dieser Austrittsseite zu leiten, so dass diese Austrittsseite eine gemeinsame beleuchtende Fläche für die beiden fotometrischen Funktionen definiert,
wobei die eine der fotometrischen Funktionen einer Tagbeleuchtung entspricht und die andere fotometrische Funktion einer blinkenden Richtungsänderungsleuchte entspricht, wobei die Lichtquellen (2; 3) insbesondere dazu ausgelegt sind, Licht in verschiedenen Farben zu emittieren;
wobei die eine der Lichtquellen dazu ausgelegt ist, weißes Licht zu emittieren, das der fotometrischen Funktion Tagbeleuchtung zugeordnet ist, und die andere der Lichtquellen dazu ausgelegt ist, bernsteinfarbenes Licht zu emittieren, das der fotometrischen Funktion blinkende Richtungsänderungsleuchte zugeordnet ist; und **dadurch gekennzeichnet, dass** sie einen Hilfslichtleiter (15) umfasst, der insbesondere einstückig ausgeführt ist und so ausgelegt ist, dass er das Licht von der einen der Lichtquellen zum Hauptlichtleiter hin leitet; und
dadurch, dass der Austritt des Hilfsleiters oder der Hauptleiter einen Reflexionsbereich umfasst, der das Licht im Hauptlichtleiter radial reflektiert.

2. Vorrichtung nach dem vorhergehenden Anspruch, **dadurch gekennzeichnet, dass** mindestens eine der Lichtquellen, insbesondere beide Lichtquellen, jeweils aus einem Licht emittierenden Chip einer LED (8) gebildet sind.

3. Vorrichtung nach dem vorhergehenden Anspruch, **dadurch gekennzeichnet, dass** die Lichtquellen auf verschiedenen LEDs (8) gebildet sind.

4. Vorrichtung nach dem vorhergehenden Anspruch, **dadurch gekennzeichnet, dass** die LEDs (8) von einem gemeinsamen Halter (10) getragen werden, wobei dieser Halter insbesondere eine flexible Folie mit elektrischer Schaltung oder eine Leiterplatte umfasst.

5. Vorrichtung nach Anspruch 2, **dadurch gekennzeichnet, dass** die Lichtquellen (2; 3) durch Licht emittierende Chips (7) derselben LED gebildet sind.

6. Vorrichtung nach einem der vorhergehenden Ansprüche, **dadurch gekennzeichnet, dass** der Hauptlichtleiter und/oder der Hilfslichtleiter (15) mindestens zwei Eintritte (16) umfassen, von denen jeder einer der Lichtquellen zugeordnet ist, so dass das Licht dieser Quelle durch den zugeordneten Eintritt in den Lichtleiter eindringt.

7. Vorrichtung nach Anspruch 6, **dadurch gekennzeichnet, dass** der Hauptlichtleiter (5) und/oder der Hilfslichtleiter (15) die Grundform eines Y aufweist, wobei die Eintritte des Lichts jeweils an einem der oberen Schenkel des Y gebildet sind und der Austritt des Lichts am Fuß des Y gebildet ist.

8. Vorrichtung nach einem der vorhergehenden Ansprüche, **dadurch gekennzeichnet, dass** der Hauptlichtleiter im Wesentlichen die Form einer Schicht aufweist.

9. Vorrichtung nach einem der vorhergehenden Ansprüche, **dadurch gekennzeichnet, dass** der Hauptlichtleiter (5) einen Reflexionsbereich umfasst, der mit Wellungen versehen ist, die so gewählt sind, dass sie die von den Lichtquellen (2; 3) kommenden Lichtstrahlen gerade richten.

10. Vorrichtung nach einem der vorhergehenden Ansprüche, **dadurch gekennzeichnet, dass** der Hauptlichterleiter (5) Entkopplungseinrichtungen (40) umfasst, insbesondere Prismen, die dazu ausgelegt sind, das Licht seitlich zu streuen, insbesondere auf eine zylindrische Fläche des Leiters.

## Claims

1. Optical device (1), for a motor vehicle, such as a lighting or signalling device, this device comprising:
- at least two light sources (2; 3) associated with different predetermined photometric functions,
- a main light guide (5) comprising an output face (6) and arranged to guide the light originating from said light sources to this output face so that this output face defines a common lighting surface for the two photometric functions,
wherein one of the photometric functions corresponds to a daytime lighting, and the other photometric function corresponds to a flashing direction indicator light, notably the light sources (2; 3) are arranged to emit lights of different colours; wherein one of the light sources is arranged to emit a white light associated with the daytime lighting photometric function and the other of the light sources is arranged to emit an amber coloured light associated with the flashing direction indicator light photometric function; and **characterized in that** it comprises an auxiliary light guide (15), notably produced in a single piece, arranged so as to guide the light from one of the light sources to the main light guide; and
**in that** the output of the auxiliary guide or the main guide comprises a reflection zone which reflects the light radially in the main light guide.

2. Device according to the preceding claim, **characterized in that** at least one of the light sources, notably both the light sources, are each formed by a light-emitting chip of an LED (8).

3. Device according to the preceding claim, **characterized in that** the light sources are formed on distinct LEDs (8).

4. Device according to the preceding claim, **characterized in that** the LEDs (8) are borne by a common support (10), this support notably comprising a flexible electrical circuit sheet or a printed circuit board.

5. Device according to Claim 2, **characterized in that** the light sources (2; 3) are formed by light-emitting chips (7) of a same LED.

6. Device according to any one of the preceding claims, **characterized in that** the main light guide and/or the auxiliary light guide (15) comprise at least two inputs (16) each associated with one of the light sources so that the light from that source penetrates into the light guide through the associated input.

7. Device according to Claim 6, **characterized in that** the main light guide (5) and/or the auxiliary light guide (15) is generally Y-shaped, the inputs of the light being each formed on a top branch of the Y and the output of the light being formed on the foot of the Y.

8. Device according to any one of the preceding claims, **characterized in that** the main light guide is substantially in the form of a sheet.

9. Device according to one of the preceding claims, **characterized in that** the main light guide (5) comprises a reflection zone provided with corrugations, chosen so as to straighten the light rays originating from the light sources (2; 3).

10. Device according to one of the preceding claims, **characterized in that** the main light guide (5) comprises decoupling means (40), notably prisms, arranged to diffuse the light laterally, notably on a cylindrical surface of the guide.
